# EUROPEAN PATENT APPLICATION

(11) **EP 1 662 731 A1**
(43) Date of publication of application: **31.05.2006**
(21) Application number: 05110018.8
(22) Date of filing: 26.10.2005
(51) Int. Cl.: H04L 12/58

(54) **Method and system for controlling access to presence information on a peer-to-peer basis**

(30) Priority: 24.11.2004 US 997331
(71) Applicant: Microsoft Corporation, Redmond WA 98052 (US)
(72) Inventor: Sinclair, Andrew P., Redmond, Washington 98052 (US); Barkley, Warren Vincent, Redmond, Washington 98052 (US)
(74) Representative: Grünecker, Kinkeldey, Stockmair & Schwanhäusser Anwaltssozietät

(57) **Abstract**

A presence information system allows access to presence information of a publisher to be controlled and enforced by the publisher on a peer-to-peer basis, rather than by a presence server. A subscriber sends to the publisher on a peer-to-peer basis a request to subscribe to the presence information of the publisher. When the publisher receives the request to subscribe to its presence information, the presence information system of the publisher can allow or deny the request based on access rights associated with the subscriber. If the request is allowed, then the publisher notifies the subscriber of its current presence state and its new presence state when it changes. The presence states may be defined at various levels of detail in a presence model.

## Description

### TECHNICAL FIELD

The described technology relates generally to controlling access to presence information.

### BACKGROUND

Real-time conversations between conversation participants via their computer systems are becoming increasingly common. A real-time conversation requires that the participants be present at their computer system (e.g., personal digital assistant) and able to respond when a communication is received. The most common form of real-time conversations is provided by instant messaging services. An instant messaging service allows participants to send messages and have them received within a second or two by the other participants in the conversation. The receiving participants can then send responsive messages to the other participants in a similar manner. To be effective, a real-time conversation relies on the participants becoming aware of, reviewing, and responding to received messages very quickly. This quick response is in contrast to conventional electronic mail systems in which the recipients of electronic mail messages respond to messages at their convenience.

When an initiating participant wants to start a real-time conversation, that participant needs to know whether the intended participants are available to respond in real time to a message. If not, then communications via conventional electronic mail, voice mail, or some other mechanism may be more appropriate. For example, if the computers of the intended participants are currently powered off, then a real-time conversation would not be possible. Moreover, if their computers are currently powered on, but the intended participants are away from their computers, a real-time conversation would also not be possible. The initiating participant would like to know the availability of the intended participants so that an appropriate decision on the form of communication can be made.

The availability status of an entity such as a computer system or a user associated with that computer system is referred to as "presence information." Users make their presence information available so that other users can decide how best to communicate with them. For example, the presence information may indicate whether a user is logged on ("online") with an instant messaging server or is logged off ("offline"). Presence information may also provide more detailed information about the availability of the user. For example, even though a user is online, that user may be away from their computer in a meeting. In such a case, the presence information may indicate "online" and "in a meeting."

In an instant messaging context, a publishing user ("publisher") may provide their presence information to a presence server that then provides the presence information to subscribing users ("subscribers"). Thus, a presence server may use a subscriber/publisher model to provide the presence information for the users of the presence service. Whenever the presence information of a user changes, the presence server is notified of the change by that user's computer system and in turn notifies the subscribing users of the change. A subscribing user can then decide whether to initiate an instant messaging conversation based on the presence information of the intended participants.

To protect the privacy of users, presence servers allow users to specify access control rights to their presence information. For example, a user may provide the presence server with a list of those other users who are authorized to access the presence information of that user. When a user who is not on the list requests to subscribe to the presence information of that user, the presence server denies the request.

A difficulty with the enforcement of access control rights to presence information via a presence server is that the storage and computation requirements of the server become a bottleneck. The bottleneck results from the need of the server to store the access control information for each user of the presence server and to check the access control information whenever a subscribe request is received and possibly whenever presence information of a user changes. As communications via real-time conversations become even more popular, there will be a need to store the access control information for tens of millions of users. Thus, the server needs to grow to accommodate increasing numbers of users and subscription requests.

Another difficulty with storage and enforcement of access control rights is that a presence server typically has a predefined set of presence states to describe the availability of an entity. These predefined sets of presence states may not, however, effectively describe the presence state of a user in many situations. For example, the presence states that are appropriate for a business person may not be appropriate for a college student. Also, a person may have different presence states depending on their current context. For example, a person at work may have very different presence states from when at leisure.

It would be desirable to have a real-time communications architecture that would avoid this bottleneck at a presence server and allow flexibility in specifying presence states.

### SUMMARY

A presence information system allows access to presence information of a publishing entity to be controlled by the publishing entity and enforced by a computer system of that publishing entity on a peer-to-peer basis, rather than by a presence server. A subscribing entity can send to the publishing entity on a peer-to-peer basis a request to subscribe to the presence information of the publishing entity. When the publishing entity receives the request to subscribe to its presence information, the presence information system of the publishing computer system can allow or deny the request based on access rights associated with the subscribing entity. If the request is allowed, then the publishing entity notifies the subscribing entity of its current presence state and new presence states. The presence information system may also allow a publishing entity to define its own presence model that indicates the presence states of the publishing entity.

### BRIEF DESCRIPTION OF THE DRAWINGS

Figure 1 is a diagram illustrating a presence model in one embodiment.

Figure 2 is a block diagram that illustrates data structures of the presence information system maintained on a peer computer system of a user in one embodiment.

Figure 3 is a block diagram that illustrates data stores and components of the presence information system used by each user in one embodiment.

Figure 4 is a flow diagram that illustrates the processing of the set user access rights component in one embodiment.

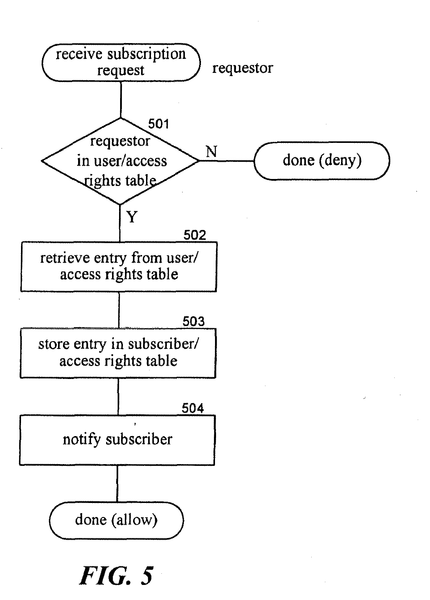

. Figure 5 is a flow diagram that illustrates the processing of the receive subscription request component in one embodiment.

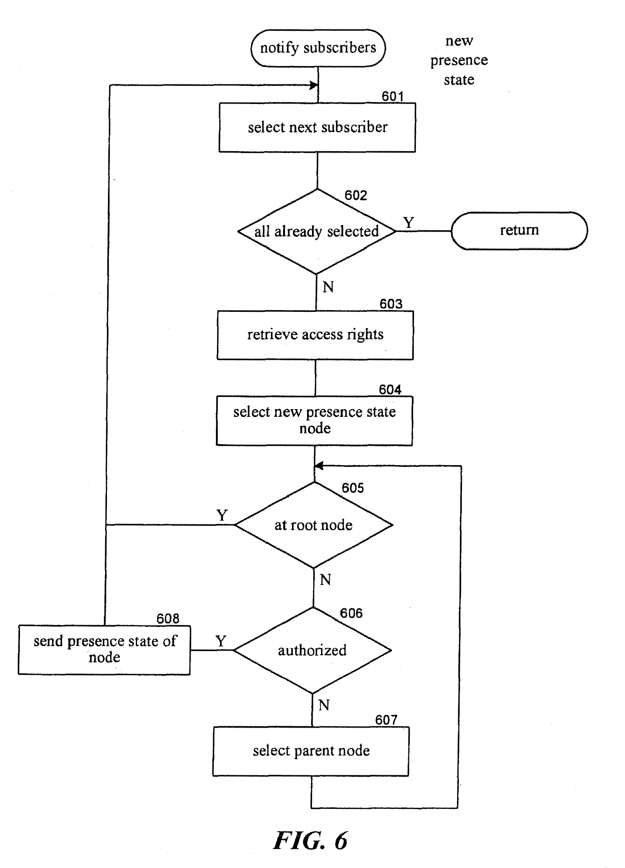

Figure 6 is a flow diagram that illustrates the processing of the notify subscribers component in one embodiment.

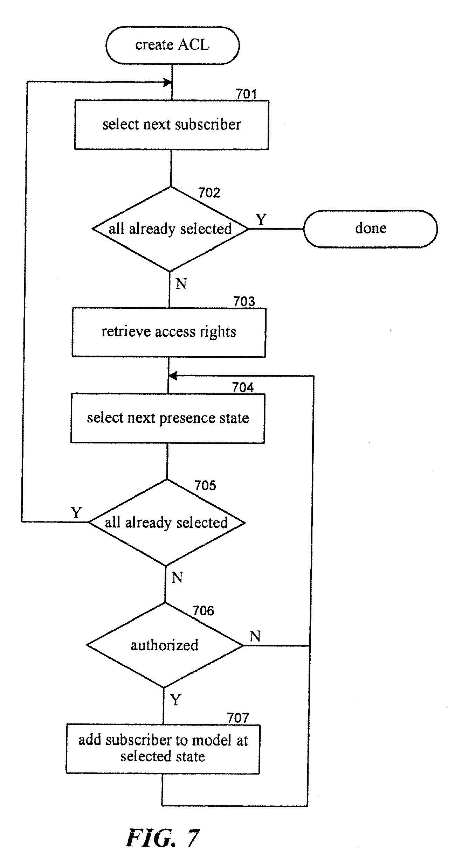

Figure 7 is a flow diagram that illustrates the processing of a create access control lists component in one embodiment.

### DETAILED DESCRIPTION

A method and system for controlling access to presence information on a peer-to-peer basis is provided. In one embodiment, the presence information system allows access to presence information of a publishing entity to be controlled by the publishing entity and enforced by the computer system of that publishing entity on a peer-to-peer basis, rather than by a presence server. Once a subscribing entity locates the address of the computer system of a publishing entity, for example, using a presence server, the subscribing entity can send to the publishing entity on a peer-to-peer basis, using the located address, a request to subscribe to the presence information of the publishing entity. When the publishing entity receives the request to subscribe to its presence information, the presence information system of the publishing computer system can allow or deny the request based on access rights associated with the subscribing entity. If the request is allowed, then the publishing entity notifies the subscribing entity of its current presence state and its new presence state when it changes. Because the publishing computer systems, rather than a presence server, maintain and enforce the access rights of their subscribing entities, the presence server is relieved of the overhead of doing so and the number of entities accessing presence information can increase without placing a heavy burden on the presence server.

To help a publishing entity control its privacy, the presence information system may allow a publishing entity to define access rights for a subscribing entity at various levels of detail of presence information. For example, a publishing entity may specify that a subscribing entity has the right to know whether the publishing entity is online or offline, but does not have the right to know any further details when the publishing entity is online. The publishing entity may, however, specify that another subscribing entity has the right to know further details such as whether the publishing entity is in a meeting or out to lunch when the publishing entity is online. Moreover, the presence information system may allow an entity to define a presence model for their presence information, rather than rely on a predefined set of presence states. A presence model may define a hierarchy of presence states. For example, one publishing entity may define a presence model that specifies the presence states of "at home" or "at work" within the "online" state, whereas another publishing entity may specify the presence states of "on the East Coast" or "on the West Coast" within the "online" state. The presence information system allows a publishing entity to define access rights of a subscribing entity based on its own presence model. The presence information system may also allow a publishing entity to define multiple presence models and to expose different presence models to the different subscribing entities. For example, a publishing entity may provide a presence model to their spouse that is different from that provided to a coworker. In this way, the presence information system allows a publishing entity to define a presence model that is customized based on the context of the publishing entity and allows a publishing entity to provide different presence models to different subscribing entities.

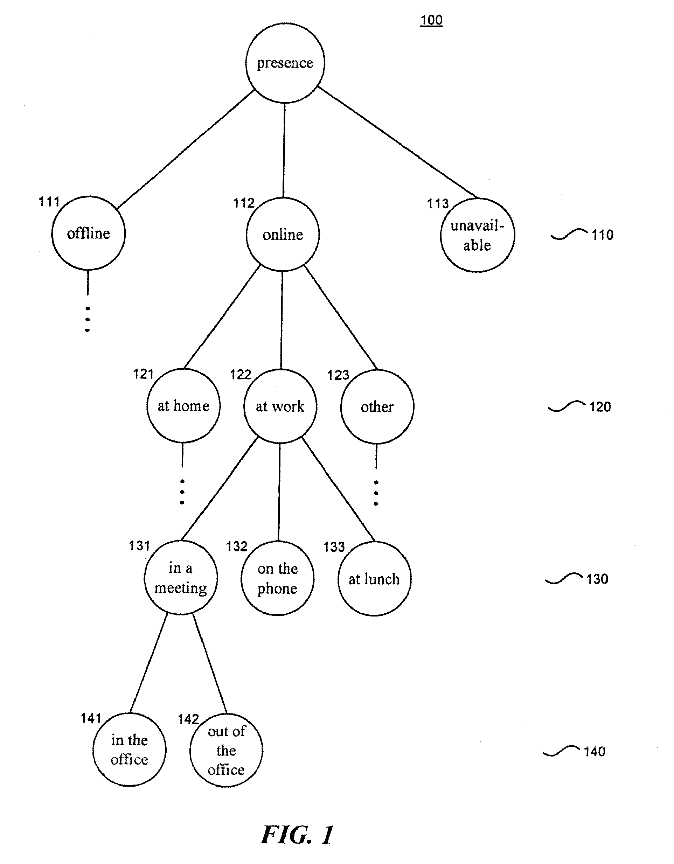

Figure 1 is a diagram illustrating a presence model in one embodiment. The presence model 100 defines a hierarchy of presence states of a publishing entity. The first-level presence states 110 are "offline" 111, "online" 112, and "unavailable" 113. "Offline" indicates that the publishing entity is not currently available, "online" indicates that the publishing entity is currently logged on to the presence server, and "unavailable" indicates that no presence information is currently available. The second-level presence states 120 of the "online" presence state are "at home" 121, "at work" 122, and "other" 123. "At home" indicates that the publishing entity is online at home, "at work" indicates that the publishing entity is online at work, and "other" indicates that the publishing entity is online at some other location. The third-level presence states 130 of the "at work" presence state are "in a meeting" 131, "on the phone" 132, and "at lunch" 133, which are self-descriptive. The fourth-level presence states 140 of the "in a meeting" presence state are "in the office" 141 and "out of the office" 142, which are also self-descriptive. The presence information system may allow a user to define the hierarchy of presence states of a presence model and to define multiple presence models.

In one embodiment, each presence state in a presence model may have an associated access control list that defines the access rights of subscribing entities to presence information associated with that state. When a publishing entity changes to a new presence state, the presence information system notifies the subscribing entities that have the appropriate access right of the new presence state. In general, a subscribing entity is notified of the nearest ancestor presence state of the new presence state (including the new presence state itself) to which the subscribing entity has access rights. For example, an employee may give their supervisor access rights to the "at work" and "in a meeting" presence states but not give access rights to their "on the phone" and "at lunch" presence state. When the employee leaves a meeting and goes to lunch, the presence information system notifies the supervisor that the employee is currently "at work," which is the nearest ancestor present state to which the supervisor has access. The same employee may give their secretary access rights to their "on the phone" and "at lunch" presence state. When the employee goes to lunch, the presence information system notifies their secretary that the employee is currently "at lunch." When the employee returns from lunch to start talking on the phone, the presence information system notifies their secretary that the employee is currently "on the phone." The presence information system, however, does not notify the supervisor because the supervisor was already notified that the employee was "at work" and the supervisor does not have access rights to the "on the phone" presence state. Each subscribing entity, thus, can be considered to have a different view into the presence model that is defined by their access rights. The presence information system may only notify those subscribing entities of a change in the presence state that is within their view.

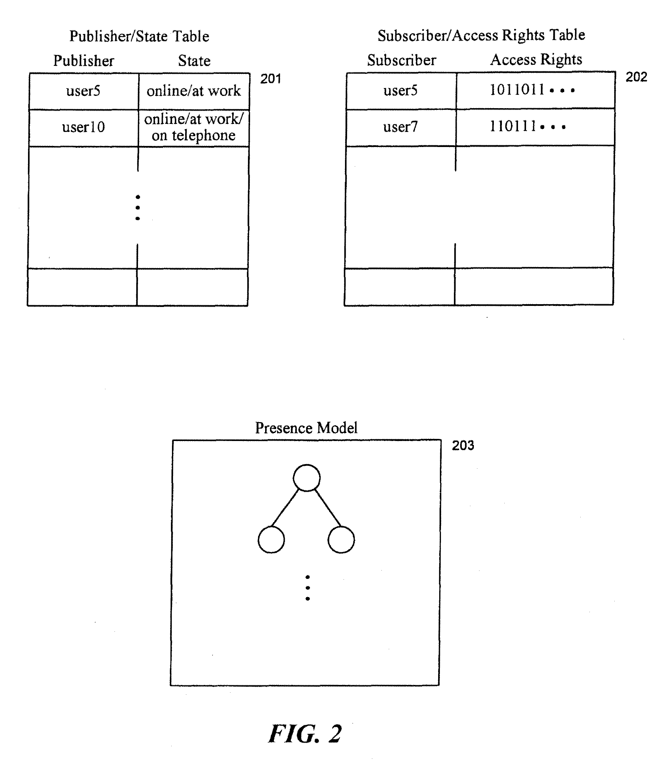

Figure 2 is a block diagram that illustrates data structures of the presence information system maintained on a peer computer system of a user in one embodiment. The data structures include a publisher/state table 201, a subscriber/access rights table 202, and a presence model 203. The presence model represents the hierarchy of presence states, which may be represented by a conventional tree data structure with each presence state being represented as a node of the tree. A user may define their own presence model. The publisher/state table contains an entry for each publishing entity to which the user subscribes. For example, the first entry indicates that the user is subscribed to the presence information of "user5" and that "user5" is currently "online/at work." Whenever the computer system receives a notification of a change in the presence state of "user5," the presence information system updates that entry of the publisher/state table. An instant messaging system or some other system can access the publisher/state table to identify the current presence state of a publishing entity to which the user is subscribed. The subscriber/access rights table contains an entry for each entity that is subscribed to the presence information of the user. Each entry maps the identification of the subscribing entity to their access rights. In one embodiment, the access rights are specified as a vector with a Boolean value for each node of the presence model. The Boolean value for a node indicates whether the subscribing entity has access rights to the presence state of that node.

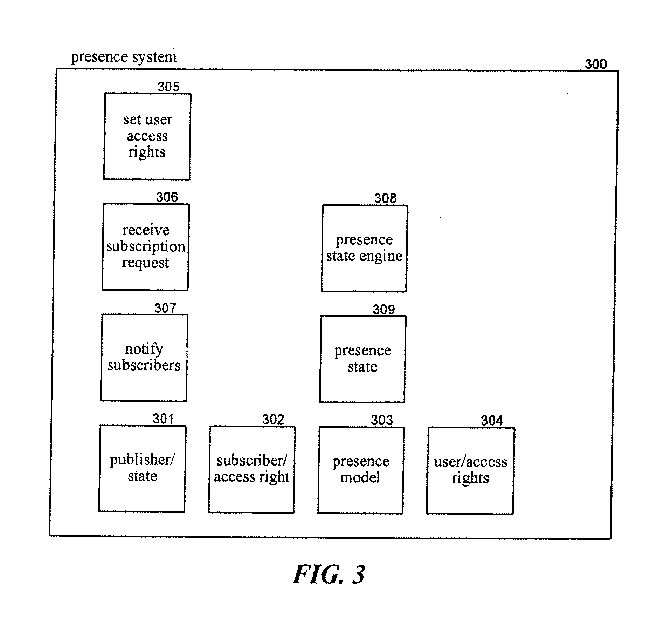

Figure 3 is a block diagram that illustrates data stores and components of the presence information system used by each user in one embodiment. In the following, the presence information system is described in the context in which the subscribing and publishing entities are users. One skilled in the art will appreciate that similar functionality can be provided for presence information of computer systems, computer system and user combinations, groups of users, and so on. Each user may have an instance of the presence information system on their computer system. The presence information system includes components for subscribing to, controlling access to, and publishing presence information on a peer-to-peer basis. The presence information system 300 includes data stores 301-304 and 309 and components 305-308. The presence information system includes a publisher/state table 301, a subscriber/access rights table 302, and a presence model 303 as described above with reference to Figure 2. The presence information system also includes a user/access rights table 304 that contains an entry for each user for which access rights have been defined by the publishing user. When a user subscribes to the presence information of the user, the presence information system copies the subscribing user's access rights to an entry in the subscriber/access rights table for use when enforcing access rights. The set user access rights component 305 allows a publishing user to set the access rights of subscribing users to their presence information. The receive subscription request component 306 receives a subscription request for presence information and either allows or denies the subscription based on the access rights of the requesting user. The notify subscribers component 307 notifies subscribing users of changes in the presence state of the publishing user. The presence state engine 308 receives events generated by the computer system and updates the presence state of the user in accordance with the presence model. The events may be generated automatically based on review of the state of the computer system or generated manually by the user. The presence information system may also include a presence state data store 309 that contains the current presence state for each presence model.

The computing device on which the presence information system is implemented may include a central processing unit, memory, input devices (e.g., keyboard and pointing devices), output devices (e.g., display devices), and storage devices (e.g., disk drives). The memory and storage devices are computer-readable media that may contain instructions that implement the presence information system. In addition, the data structures and message structures may be stored or transmitted via a data transmission medium, such as a signal on a communications link. Various communication links may be used, such as the Internet, a local area network, a wide area network, a point-to-point dial-up connection, a cell phone network, and so on.

Embodiments of the presence information system may be implemented in various operating environments that include personal computers, server computers, hand-held or laptop devices, multiprocessor systems, microprocessor- based systems, programmable consumer electronics, digital cameras, network PCs, minicomputers, mainframe computers, distributed computing environments that include any of the above systems or devices, and so on. The computer systems may be cell phones, personal digital assistants, smart phones, personal computers, programmable consumer electronics, digital cameras, and so on.

The presence information system may be described in the general context of computer-executable instructions, such as program modules, executed by one or more computers or other devices. Generally, program modules include routines, programs, objects, components, data structures, and so on that perform particular tasks or implement particular abstract data types. Typically, the functionality of the program modules may be combined or distributed as desired in various embodiments.

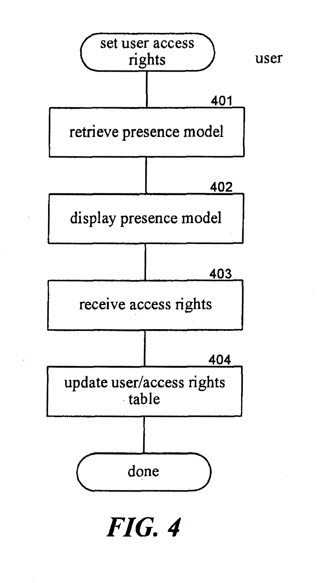

Figure 4 is a flow diagram that illustrates the processing of the set user access rights component in one embodiment. The component is passed an indication of a user whose access rights to the publishing user are to be controlled. The component provides a user interface through which the publishing user can specify the access rights. In block 401, the component retrieves the presence model that is appropriate for the passed user. In block 402, the component displays information of the retrieved presence model. The component may display an indication of each presence state and allow the user to indicate whether to allow the passed user access to that presence state. In block 403, the component receives access rights for the passed user from the publishing user. In block 404, the component updates the user/access rights table to reflect the new access rights of the passed user. The component then completes.

Figure 5 is a flow diagram that illustrates the processing of the receive subscription request component in one embodiment. The component is passed an indication of a requesting user and determines whether to allow or deny the request. In decision block 501, if the user/access rights table does not contain an entry for the requesting user, then the component denies the request and completes, else the component continues at block 502. In block 502, the component retrieves the entry from the user/access rights table for the requesting user. In block 503, the component stores the entry in the subscriber/access rights table. In block 504, the component notifies the requesting user that the subscription has been allowed. The component then completes.

Figure 6 is a flow diagram that illustrates the processing of the notify subscribers component in one embodiment. The component is invoked when the presence state of the publishing user changes. The component is passed the new presence state and notifies the subscribing users as appropriate. In block 601, the component selects the next subscribing user as indicated by the subscriber/access rights table. In decision block 602, if all the subscribing users have already been selected, then the component returns, else the component continues at block 603. In block 603, the component retrieves the access rights of the selected subscribing user. In block 604, the component selects the node of the presence model corresponding to the new presence state. In blocks 605-607, the component loops searching for the nearest ancestor presence state of the new presence state to which the selected subscribing user has access rights. In decision block 605, if the selected node is the root node, then the subscribing user does not have access rights to the new presence state and the component loops to block 601 to select the next subscribing user, else the component continues at block 606. In decision block 606, if the selected subscribing user is authorized to access the selected presence state, then the component continues at block 608, else the component continues at block 607. In block 607, the component selects the parent node of the selected node and then loops to block 605 to determine whether the selected subscribing user is authorized to access the selected parent node. In block 608, the component sends an indication of the presence state of the selected node to the selected subscribing user and then loops to block 601 to select the next subscribing user.

Figure 7 is a flow diagram that illustrates the processing of a create access control lists component in one embodiment. In this embodiment, the presence information system maintains an access control list for each presence state. When the presence state changes, the presence information system may visit each ancestor node of the new presence state and notify subscribing users as indicated. The presence information system may store at each node an indication of each subscribing user that has access to the presence information of that state. In such a case, a subscribing user would be identified at each node from the root node to the node of the most detailed presence state to which it has access. In an alternate embodiment, the presence information system may indicate the subscribing users only at the node of the most detailed presence state to which it has access on each path to a leaf node. Although this embodiment would avoid the storing of redundant information at ancestor nodes (since a subscribing user may be assumed to have access rights to all ancestor presence states), the presence information system would need to visit each node on the path of the node of the new presence state from the root node to the leaf node. The component generates an access control list to be associated with each presence state of a presence model. In block 701, the component selects the next subscribing user of the subscriber/access rights table. In decision block 702, if all the subscribing users have already been selected, then the component completes, else the component continues at block 703. In block 703, the component retrieves the access rights associated with the selected subscribing user. In blocks 704-707, the component loops adding the selected subscribing user to the access control lists of each presence state that the selected subscriber can access. In block 704, the component selects the next presence state. In decision block 705, if all the presence states have already been selected, then the component loops to block 701 to select the next subscribing user, else the component continues at block 706. In decision block 706, if the selected subscribing user is authorized to access the selected presence state, then the component continues at block 707, else the component loops to block 704 to select the next presence state. In block 707, the component adds the selected subscribing user to the access control list associated with the node of the selected presence state and then loops to block 704 to select the next presence state.

From the foregoing, it will be appreciated that specific embodiments of the presence information system have been described herein for purposes of illustration, but that various modifications may be made without deviating from the spirit and scope of the invention. One skilled in the art will appreciate that the users associated with an enterprise (e.g., a corporation) may have their presence models stored on and/or enforced by a server of the enterprise. Thus, such a server would act as a proxy for the computer system of the users. Accordingly, the invention is not limited except as by the appended claims.

## Claims

1. A method in a first computer system of a first entity for controlling access to presence information of the first entity, the method comprising:
providing at the first computer system access rights of entities to the presence information of the first entity;
receiving from a second computer system of a second entity a request to subscribe to presence information of the first entity; and
sending from the first computer system to the second computer system presence information of the first entity in accordance with the access rights of the second entity.

2. The method of claim 1 wherein the first computer system and the second computer system are peers.

3. The method of claim 1 wherein the first computer system and the second computer system are in a network of computer systems of entities where a computer system provides access rights of entities to the presence information of its entity.

4. The method of claim 1 including providing at the first computer system a presence model specifying presence states of the first entity.

5. The method of claim 4 wherein multiple presence models are provided for the first entity and wherein the access rights of entities further identify a presence model.

6. The method of claim 4 wherein multiple presence models are provided for the first entity and wherein different presence models apply to different other entities.

7. The method of claim 4 wherein the presence states are hierarchically organized.

8. The method of claim 4 wherein the access rights specify the presence states to which the second entity has access.

9. The method of claim 1 wherein an entity is a person.

10. The method of claim 1 wherein an entity is a device.

11. The method of claim 1 wherein after receiving from the second computer system of the second entity a request to subscribe to presence information of the first entity, determining whether the second entity is allowed to subscribe to the presence information of the first entity.

12. A computer-readable medium containing instructions for controlling a computer system of a user to provide peer-to-peer access to presence information of the user, by a method comprising:
providing at the computer system a presence model specifying a hierarchy of presence states of the user;
receiving at the computer system access rights of entities to the presence information of the user, the access rights for an entity indicating the presence states of the user to which the entity has access such that when the entity has access to a presence state of the user, the entity also has access to all ancestor presence states;
receiving from computer systems of the entities requests to subscribe the entities to presence information of the user;
upon receiving at the computer system a request to subscribe an entity to the presence information of the user,
determining whether the entity is allowed to access presence information of the user; and
when it is determined that the entity is allowed to access presence information of the user, subscribing the entity to the presence information of the user; and
when the presence state of the user changes to a new presence state, for entities that are subscribed to the presence information of the user,
identifying the nearest ancestor presence state to the new presence state to which the entity has access rights; and
sending to the computer system of the entity an indication of the identified presence state as the new presence state of the user.

13. The computer-readable medium of claim 12 wherein multiple presence models are provided for the user and wherein the access rights of an entity specify a presence model.

14. The computer-readable medium of claim 13 wherein a current presence state is maintained for each presence model.

15. The computer-readable medium of claim 12 wherein an entity is a person.

16. The computer-readable medium of claim 12 wherein an entity is a device.

17. The computer-readable medium of claim 12 including modifying the presence model.

18. The computer-readable medium of claim 17 wherein the user modifies the presence model.

19. The computer-readable medium of claim 12 wherein the user specifies the access rights of the entities.

20. A method in a computer system for controlling access to presence information of a first entity, the method comprising:
providing multiple presence models for the first entity, a presence model specifying presence states of the first entity, a presence model having a current presence state;
providing an association of a presence model to an entity; and
when a presence state of a presence model changes, notifying computer systems of the associated entities of the new presence state for the presence model.

21. The method of claim 20 wherein the access rights of an entity are specified based on the associated presence model.

22. The method of claim 21 wherein the notifying is in accordance with the access rights of the entity to presence information of the associated presence model.

23. The method of claim 20 wherein a presence model is a hierarchy of presence states.

24. The method of claim 23 wherein an entity is notified of the nearest ancestor presence state to the new presence state to which the entity has access rights.

25. A computer-readable medium containing instructions for controlling a first computer system of a first entity to provide access to presence information of the first entity, the method comprising:
providing at the first computer system access rights of a second entity to the presence information of the first entity; and
when presence information of the first entity changes, sending from the first computer system to a second computer system of the second entity an indication of the change in presence information of the first entity in accordance with the access rights of the second entity.

26. The computer-readable medium of claim 25 wherein the first computer system and the second computer system are peers.

27. The computer-readable medium of claim 25 wherein the first computer system and the second computer system are in a network of computer systems of entities and a computer system provides access rights of entities to the presence information of its entity.

28. The computer-readable medium of claim 25 including providing at the first computer system a presence model specifying presence states of the first entity.

29. The computer-readable medium of claim 28 wherein multiple presence models are provided for the first entity and wherein an entity is associated with one of the presence models.

30. The computer-readable medium of claim 28 wherein the presence states are hierarchically organized.
